# EUROPÄISCHE PATENTSCHRIFT

(11) **EP 3 756 455 B1**
(45) Veröffentlichungstag und Bekanntmachung des Hinweises auf die Patenterteilung: **09.03.2022**
(21) Anmeldenummer: 20179193.6
(22) Anmeldetag: 10.06.2020
(51) Int. Cl.: A01J 25/12, A01J 25/15, A01J 25/16, A01J 25/11

(54) **VERFAHREN UND VORRICHTUNG ZUR HERSTELLUNG VON KRÄUTERKÄSE**
PROCESS AND DEVICE FOR MANUFACTURING OF HERBAL CHEESE
PROCÉDÉ ET APPAREIL POUR LA FABRICATION DE FROMAGE AUX HERBES

(30) Priorität: 17.06.2019 CH 8092019
(43) Veröffentlichungstag der Anmeldung: 30.12.2020
(73) Patentinhaber: Kalt Maschinenbau AG, 9604 Lütisburg (CH)
(72) Erfinder: Grüninger, Siegfried, 9011 St. Gallen (CH)
(74) Vertreter: Frommhold, Joachim

(56) Entgegenhaltungen:
- EP-A1- 0 406 899
- EP-A1- 1 591 016
- EP-A1- 3 167 709

## Beschreibung

Die Erfindung betrifft ein Verfahren und Vorrichtung zur Herstellung von Kräuterkäse, insbesondere zur Herstellung von Hartkäse, der mit Kräutern, Gewürzen oder dergleichen angereichert ist.

Eine Vorrichtung zur industriellen Herstellung von Käselaiben ist z. B. aus der EP-A-350777 bekannt. Diese umfasst eine Einschwemmpresse mit einer rechteckigen und oben offenen Wanne zur Aufnahme von Formen, ein Säulengestell zur Anordnung eines heb- und senkbaren Presskopfes und eines Verteilkopfes zur Zuführung und Dosierung der Käserohmasse in die Formen und einen, auf der Wanne verfahrbaren Portalwagen zur Führung des Verteilkopfes und zur Handhabung eines Wendemechanismusses für die Formen. Der Verteilkopf muss dabei manuell bereitgestellt resp. gewechselt werden. Die EP-A-406899 zeigt eine Weiterbildung einer solchen Vorrichtung, bei der die Formen in Kassetten aufgenommen sind, die wiederum kompakt und reihenartig in der Wanne angeordnet sind. Oberhalb der Formen ist ein Presskopf mit auf die Formen ausgerichteten Pressstempeln zum Pressen der Käserohmasse vorgesehen. Die Kassetten haben eine spaltminimierende Randausbildung und zum schieben der Kassetten ist eine mechanisierte Einrichtung vorgesehen.

Die Käserohmasse gelangt über ein Zuführrohr, dessen Enden am Kessel eines Käsefertigers bzw. am Verteilkopf angeschlossen sind, in den Verteilkopf und von da in die runden oder eckigen Formen, die in der Wanne der Kassettenpresse angeordnet sind. Die Käserohmasse wird nach Befüllung der Formen mittels Pressdruck entmolkt und danach können die Rohkäse entformt werden.

Der Erfindung liegt daher die Aufgabe zugrunde, ein Verfahren zur Herstellung von Kräuterkäse und insbesondere zur Herstellung von Hartkäse, zu entwickeln, welches eine maschinelle Einbringung von Kräutern, Gewürzen oder dergleichen in die Käserohmasse ermöglicht.

Die Aufgabe ist mit den Merkmalen des Patentanspruchs 1 gelöst.

Erfindungsgemäss wird Käserohmasse in Käseformen, die bevorzugt in einer Wanne einer Kassettenpresse angeordnet sind, vorgängig entmolkt, abgefüllt und nachfolgend gepresst, wobei gleichzeitig resp. parallel zur Käserohmasse, insbesondere gleichmässig, auch Kräuter, Gewürze oder dergleichen in die Käseformen eingebracht werden.

Bevorzugte Ausführungsformen sind in den abhängigen Ansprüchen offenbart.

Die Befüllung der Käseformen erfolgt mittels eines Verteilkopfes, der eine gleichmässige hinund hergehende Bewegung entlang der Wanne ausführt, so dass die Kräuter und/oder Gewürze ebenfalls gleichmässig und ggf. "schichtweise" in die Käserohmasse eingebracht werden. Die Gewürzverteilung soll möglichst gleichmässig über den Querschnitt des Käselaibs erfolgen und die Käselaibe somit auch eine gleiche Gewürzdichte aufweisen.

Die Kräuter und/oder Gewürze werden vorteilhaft mit Wasser vermischt, gleichmässig gerührt und erhitzt und nach Erreichung einer voreingestellten Temperatur über einen Abfüllkopf gleichmässig als Kräuter-Wassermischung in die Käseformen eingebracht.

Durch die Mischung in Wasser können die Kräuter und/oder Gewürze besser zu und in die Käseformen gefördert werden und verteilen sich gleichmässig in der Käserohmasse.

Der Volumenstrom der Gewürzmedien wird bevorzugt über alle Dosierstellen rezeptabhängig mittels der Maschinensteuerung eingestellt, wobei auch eine individuelle Einstellung je Dosierstelle möglich ist.

Das erfindungsgemässe Verfahren ermöglicht eine maschinelle Einbringung von Kräutern, Gewürzen oder dergleichen in Hartkäse, wobei Kräuter zugleich gut und gleichmässig verteilt im Käselaib vorliegen, was einen gleichmässigen Geschmack des Käses erzeugt. Die erfindungsgemässe Entmolkung vor einer Zuführung der Kräuter und/oder Gewürze bzw. die, weitgehende, Trennung von Käsebruch und Molke verhindert zudem eine Kontaminierung der Molke mit Kräutern und/oder Gewürzen. Dies verbessert und erweitert die spätere Verwendung der Molke.

Die Erfindung betrifft weiterhin eine Vorrichtung zur Herstellung von Kräuterkäse, umfassend Käseformen zur Befüllung mit Käserohmasse, die in einer offenen Wanne, insbesondere in einer Kassettenpresse angeordnet sind, der ein Presskopf mit einer Vielzahl, auf die Käseformen ausgerichtete Pressstempel zum Pressen der Käserohmasse und ein Verteilkopf zum Einschwemmen der Käserohmasse zugeordnet sind, wobei der Verteilkopf entlang der Längsseiten der Wanne hin und her verfahrbar angeordnet ist, und dass dem Verteilkopf ein Abfüllkopf für, mit Wasser vermischte, Kräuter und/oder Gewürze zugeordnet ist.

Bevorzugte Ausführungsformen sind in den abhängigen Ansprüchen offenbart.

Vorteilhaft ist der Verteilkopf mit einer drehbeweglichen Gelenkrohranordnung zum Zuführen der Käserohmasse von einem Käsefertiger gekoppelt.

Der Abfüllkopf ist vorteilhaft mit Dosierern oder Quetschventilen versehen, deren Anzahl auf die Reihen an Käseformen, die quer zur Verfahrrichtung des Verteilkopfes in der Wanne anordenbar sind, abgestimmt ist.

Weiterhin ist der Abfüllkopf bevorzugt zur Zuführung einer Wasser-Kräutermischung mit einem Mehrzweckerhitzer koppelbar bzw. gekoppelt. Der Mehrzweckerhitzer ist zumindest mit einem Rührwerk, einer Heizeinrichtung und einer Pumpe zum fördern der erhitzten Wasser-Kräutermischung in den Abfüllkopf versehen.

Vorteilhaft ist der Abfüllkopf mittels eines flexiblen Schlauches und ggf. weiteren Rohrleitungen mit dem Mehrzweckerhitzer verbunden.

Die Erfindung wird nachfolgend in einem Ausführungsbeispiel anhand einer Zeichnung näher beschrieben. In der Zeichnung zeigen die
Fig. 1: eine Kassettenpresse mit erfindungsgemässer Vorrichtung;
Fig. 2: die erfindungsgemässe Vorrichtung nach Fig. 1;
Fig. 3: die erfindungsgemässe Vorrichtung nach Fig. 1 im Detail;
Fig. 4: die erfindungsgemässe Vorrichtung nach Fig. 1 in einer zweiten Ausführungsform;
Fig. 5: die erfindungsgemässe Vorrichtung nach Fig. 1 und 4 in der zweiten Ausführungsform.

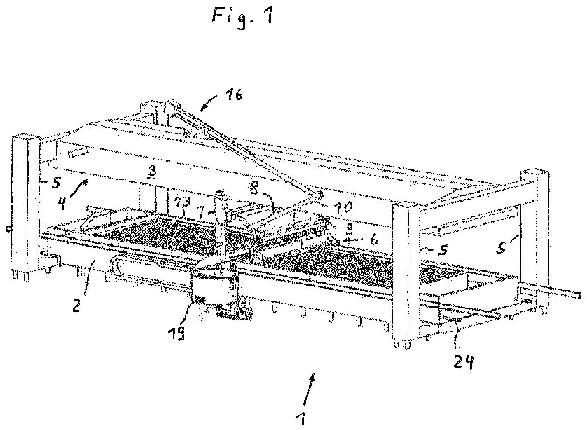

Eine Kassettenpresse 1 (Fig. 1) umfasst im vorgestellten Beispiel zumindest
- eine in der Draufsicht rechteckige und oben offene Wanne 2 der Kassettenpresse 1 mit in der Draufsicht rechteckigen, oben offenen Kassetten 15, die in Reihen quer zur Längsrichtung der Wanne 2 nebeneinander angeordnet sind;
- in den Kassetten anordenbare Käseformen 13 zur Aufnahme von zu pressender Käserohmasse, wobei eine Käseform 13 im Beispiel länglich und rechteckig ist und jeweils aus einem inneren, gelochten Mantel und einer äusseren Hülle mit mindestens einem Auslass für die abzupressende Flüssigkeit besteht, und wobei eine Kassette bevorzugt sechs bis achtzehn Formen umfasst;
- auf den oberen Rändern, die die Aussenseiten des Kassettenblocks in der Wanne 2 in Längs- und Querrichtung bilden, Randbleche in Höhe von einigen Zentimetern angeordnet sind, bevorzugt geschweisst, um ein einschwemmen der Käserohmasse bis oberhalb der Kassettenoberkante zu ermöglichen;
- einen, auf Endsäulen 5 angeordneten Presskopf 3 mit einer Vielzahl, auf die Käseformen 13 ausgerichteten Pressstempel 4 zum Pressen der Käserohmasse, der z. B. entsprechend der Offenbarung der EP-B-543899 ausgebildet ist, sowie ggf. Niederhalter zum abdrücken des Presskopfes 3 von den Kassetten;
- einen Abfüllapparat zum Einschwemmen der Käserohmasse, der an einem verfahrbaren Portalwagen 7 angeordnet ist, der motorisch betrieben entlang der Längsseiten der Wanne 2 verfahrbar ist;
- eine Einrichtung zur Einbringung von Kräutern oder Gewürzen in die Käserohmasse;
- eine Handhabungseinrichtung zum anheben, verfahren zu und ablegen einer Kassette auf einer Fördereinrichtung (nicht dargestellt) ausserhalb der Wanne 2;
- eine Einrichtung zum drehen/wenden (nicht dargestellt) der Kassetten bzw. einer Kassettenreihe um deren Längsachse;
- eine vertikal verfahrbare Ausblaseinrichtung (nicht dargestellt) mit Ausblasdüsen, wobei jeder Form einer Kassette mindestens eine Ausblasdüse zugeordnet ist, um so die Käselaibe auf die Fördereinrichtung zu entleeren.

Der Abfüllapparat des Portalwagens 7 umfasst einen Verteilkopf 6 mit einem Trockenabfüller 27 mit einer Anzahl Dosierköpfe 11, die auf die Anzahl der in einer Reihe in der Wanne 2 (in Längsrichtung der Wanne 2) anordenbaren Käseformen 13 abgestimmt ist. Der Verteilkopf 6 umfasst weiterhin ein Verteilrohr 9 und ein Zuführrohr 8 zur Zuführung und Verteilung der Käserohmasse auf die Dosierköpfe 11.

Der Trockenabfüller 27 umfasst ein schräg angeordnetes Spaltsieb 28 durch welches die Molke vorgängig abgeleitet wird.

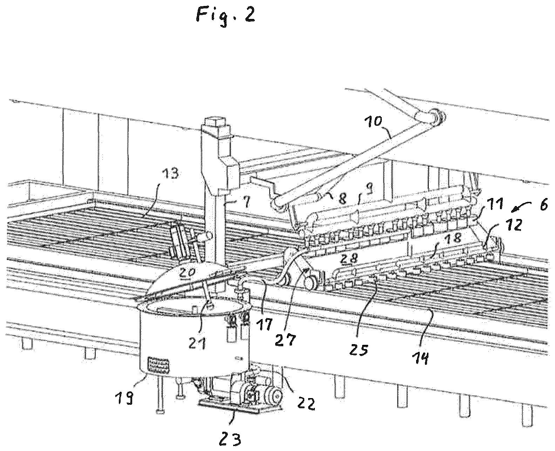

Der Portalwagen läuft auf Führungen 14 an auf der Längsseite der Wanne 2 (Fig. 2) mittels Laufrollen.

Mittels einer Gelenkverbindung ist das Zuführrohr 8 des Verteilkopfes 6 mit einem Doppelgelenk aus zwei winklig zueinander angeordneten und drehgelenkig miteinander verbundenen, rohrförmigen Gelenkstücken verbunden. Mittels einer weiteren Gelenkverbindung ist eine gelenkige Verbindung zu einem etwa senkrecht zur Ebene der Wanne 2 stehendem Rohr 10 hergestellt, das an einer Anhängevorrichtung 16 angehangen ist. Es verfügt über eine nicht dargestellte Anbindung zu einem Käsefertiger. Die Anhängevorrichtung 16 ist an einer Hallendecke oder einem hoch gelegenen Portal befestigt.

Während einer Befüllung der Formen wird der Portalwagen 7 mit dem Verteilkopf 6 entlang der Längsachse der Wanne 2 zwischen den Endsäulen 5 verfahren. Die Gelenkrohranordnung bildet diese Bewegung ohne Totpunkte oder Schiefstellungen nach.

Infolge des Doppelgelenks und der gelenkigen Anbindung der Anhängevorrichtung befindet sich das Rohr 10 etwa senkrecht und ist ständig gefüllt. Die Verteilung der Käserohmasse und insbesondere des Käsebruchs auf die Formen erfolgt gleichmässig. Es treten keine produktflusshemmenden Winkelabweichungen der Gelenkrohranordnung auf.

An beiden Innen-Längsseiten der Wanne 2 ist ein Kanal 26 angeordnet, in den aus dem Trockenabfüller 27 abgeleitete Molke einfliesst und mittels eines Abflussrohres 24 an der Ausladeseite der Kassettenpresse 1 zur weiteren Verwendung abgeführt wird.

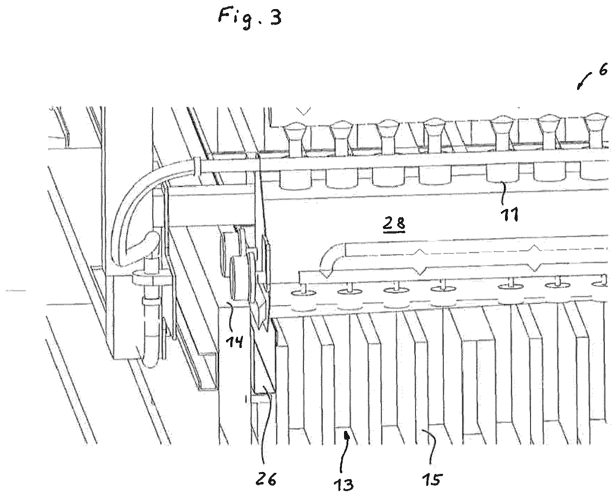

Der Abfüllkopf 12 für Kräuter und Gewürze ist analog zum Verteilkopf 6 für den Käsebruch (Käserohmasse) aufgebaut. Lediglich die Nenndurchmesser von Zuführrohr 18, Verteilrohr und Dosierern 25 sind kleiner. Der Abfüllkopf 12 wird in einem Ausführungsbeispiel nach Fig. 2, 3 mittels, nicht näher beschriebener, Schnell-Befestigungsmittel am Verteilkopf 6 befestigt und ist entsprechend einfach wieder abnehmbar. Mittels eines flexiblen und, für die Verfahrbewegung, ausreichend langen Schlauchs 17 und eines Rohres 22 mit einem Mehrzweckerhitzer 19 verbunden. Der Mehrzweckerhitzer 19 ist mit einem aufklappbaren Deckel 20 verschliessbar und verfügt über ein Rührwerk 21. Ihm ist weiterhin eine Pumpe 23 zugeordnet.

Im Mehrzweckerhitzer 19 wird eine Mischung aus Kräutern und Wasser oder Molke erhitzt und durch Rohr 22, Schlauch 17 und Verteilrohr 18 in die Dosierer 25 des Abfüllkopfes 12 gepumpt.

Durch die Auflösung der Kräuter und/oder Gewürze in Wasser oder Molke sind die Kräuter und/oder Gewürze besser förderbar und werden homogen durchmischt.

Die im Mehrzweckerhitzer 19 vorgesehene Erhitzung der Kräuter dient ihrer Sterilisierung.

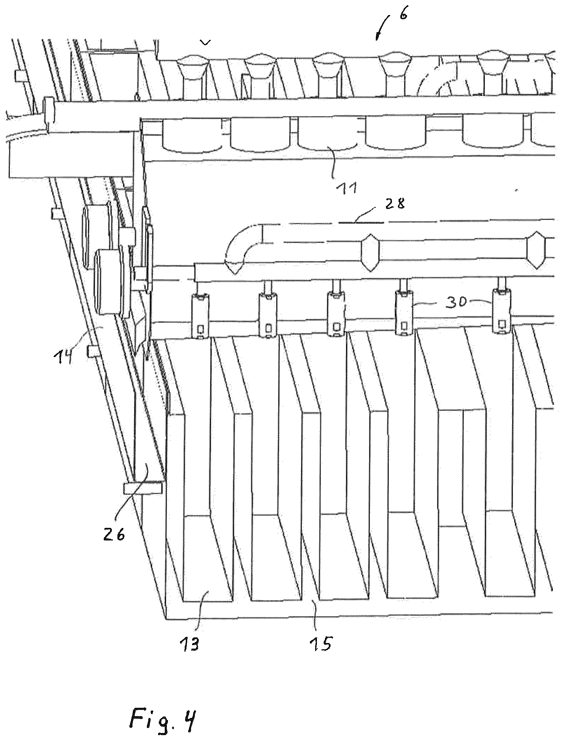

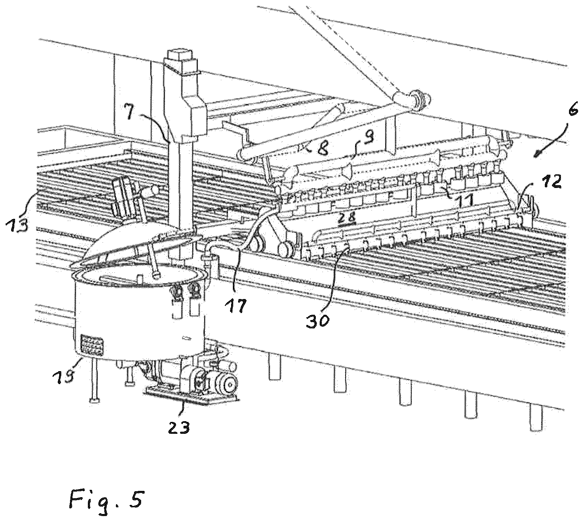

Die Reinigung der Kräuteraufbereitung kann, eingeschlossen Rohr 22, Schlauch 17, Verteilrohr 18, Dosierer 25 (oder Quetschventile 30 gemäss Fig. 4, 5) und Abfüllkopf 12 in einem CIP-Kreislauf erfolgen.

Für eine gleichmässige Verteilung von Käsebruch (Käserohmasse) und Kräutern ist je Käseformreihe (in Längsrichtung der Wanne 2) je ein Dosierkopf 11 und je ein Dosierer 25 (oder Quetschventil 30) vorgesehen.

Mehrzweckerhitzer 19 und Abfüllkopf 12 können für die Produktion von Kräuterkäse einfach beigestellt werden, so dass die Kassettenpresse 1 flexibel und auch ohne diese Elemente betreibbar ist. Möglich ist ein manueller Betrieb, im Normalfall jedoch ein Automatikbetrieb.

Eine zweite Ausführungsform mit intermittierenden Quetschventilen 30 anstelle von Dosierern 25 ist in den Fig. 4 und 5 dargestellt. Bei solchen Quetschventilen 30 ist der Wasserbedarf zur Zuführung der Kräuter oder Gewürze geringer als bei Dosierern und somit ist auch weniger Wasser aus der Käsemasse abzupressen.

Zur Herstellung von Kräuterkäse in Form von Hartkäse erfolgt eine übliche Bereitstellung der Käserohmasse (Käsebruch) in einem nicht dargestellten Käsefertiger. Parallel hierzu wird der Mehrzweckerhitzer 19 mit einer gewünschten Menge an Wasser oder Molke gefüllt und es werden die gewünschten Kräuter und/oder Gewürze zugegeben. Nach Schliessung des Deckels 20 werden Heizung und Rührwerk 21 eingeschaltet. Ist eine voreingestellte Temperatur erreicht wird diese gehalten.

Ist die Käserohmasse fertig gerührt, wird sie vom Käsefertiger über das Gelenkrohr 10 zum Verteilkopf 6 gepumpt und der Portalwagen 7 zur Hin- und Herbewegung in Längsrichtung der Wanne 2 gestartet. Die Käserohmasse wird über die Dosierköpfe 11 des Verteilkopfes 6 gleichmässig auf das Spaltsieb 28 aufgebracht und gleitet weiter in die Käseformen 13. Die Molke rinnt vorgängig durch das Spaltsieb ins Innere des Trockenabfüllers und wird seitlich in den Kanal 26 geleitet und abgeführt. Parallel dazu startet die Pumpe 23, so dass auch die Wasser-Kräutermischung gleichmässig ("schichtweise") über die Dosierer 25 in die entmolkte Käserohmasse direkt in die Käseformen 13 eingebracht wird.

Da ca. 80% der Molke bereits vor dem Kräuter- Eintrag abgeführt wird, ist die Molke nicht kontaminiert und kann einer weiteren Verwendung zugeführt werden.

Sobald die Käseformen 13 wie vorgesehen mit Käserohmasse gefüllt sind, wird die weitere Zuführung von Käserohmasse und Kräuter-Wassermischung gestoppt. Im Normalfall werden Käsefertiger und Mehrzweckerhitzer 19 so befüllt, dass sie bei vollständiger Befüllung der Käseformen 13 geleert sind.

Anschliessend wird die Käserohmasse durch abpressen fertig entmolkt, Rührwerk 21 und Pumpe 23 werden dabei abgestellt.

Nach Austrag der Kassetten mit den Käseformen 13 erfolgt die Reinigung der Kassettenpresse und Kräuteraufbereitung in üblicher Weise mittels Heisswasser in einem CIP-Kreislauf.

### Bezugszeichen

- 1: Kassettenpresse
- 2: Wanne
- 3: Presskopf
- 4: Pressstempel
- 5: Endsäule
- 6: Verteilkopf
- 7: Portalwagen
- 8: Zuführrohr
- 9: Verteilrohr
- 10: Gelenkrohr
- 11: Dosierkopf
- 12: Abfüllkopf
- 13: Käseform
- 14: Führungen
- 15: Kassette
- 16: Anhängevorrichtung
- 17: Schlauch
- 18: Verteilrohr
- 19: Mehrzweckerhitzer
- 20: Deckel
- 21: Rührwerk
- 22: Rohr
- 23: Pumpe
- 24: Abflussrohr
- 25: Dosierer
- 26: Kanal
- 27: Trockenabfüller
- 28: Spaltsieb
- 30: Quetschventil

## Patentansprüche

1. Verfahren zur Herstellung von Kräuterkäse, insbesondere von Hartkäse, wobei Käserohmasse ca. zu 80% entmolkt in Käseformen (13), die bevorzugt in einer Wanne (2) einer Kassettenpresse (1) angeordnet sind, gefüllt und nachfolgend gepresst wird, **dadurch gekennzeichnet, dass** gleichzeitig resp. parallel zur Käserohmasse gleichmässig Kräuter, Gewürze in die Käseformen (13) eingebracht werden

2. Verfahren nach Anspruch 1, **dadurch gekennzeichnet, dass** die Entmolkung in einem Trockenabfüller (27) erfolgt und die Molke unkontaminiert abgeführt wird und einer weiteren Verwendung zugeführt wird.

3. Verfahren nach Anspruch 1 oder 2, **dadurch gekennzeichnet, dass** die Befüllung der Käseformen (13) mittels eines Verteilkopfes (6) erfolgt, der eine gleichmässige hin- und hergehende Bewegung entlang der Wanne (2) ausführt.

4. Verfahren nach einem der Ansprüche 1 bis 3, **dadurch gekennzeichnet, dass** die Kräuter und/oder Gewürze mit Wasser vermischt, bevorzugt gleichmässig gerührt und erhitzt werden und nach Erreichung einer voreingestellten Temperatur über einen Abfüllkopf (12) gleichmässig als Kräuter-Wassermischung in die Käseformen eingebracht werden.

5. Vorrichtung zur Herstellung von Kräuterkäse, insbesondere von Hartkäse, umfassend Käseformen (13) zur Befüllung mit Käserohmasse, die in einer offenen Wanne (2) angeordnet sind, der ein Presskopf (3) mit einer Vielzahl, auf die Käseformen (13) ausgerichtete Pressstempel (4) zum Pressen der Käserohmasse und ein Verteilkopf (6) zum Einschwemmen der Käserohmasse zugeordnet sind, wobei der Verteilkopf (6) entlang der Längsseiten der Wanne (2) hin und her verfahrbar angeordnet ist, **dadurch gekennzeichnet, dass** dem Verteilkopf (6) ein Abfüllkopf (12) für, mit Wasser vermischte, Kräuter und/oder Gewürze zugeordnet ist.

6. Vorrichtung nach Anspruch 5, **dadurch gekennzeichnet, dass** der Verteilkopf (6) mit einem Trockenabfüller (27) versehen ist und mit einer drehbeweglichen Gelenkrohranordnung zum Zuführen der Käserohmasse von einem Käsefertiger gekoppelt ist.

7. Vorrichtung nach Anspruch 5 oder 6, **dadurch gekennzeichnet, dass** der Abfüllkopf (12) mit Dosierern (25) versehen ist, deren Anzahl auf Reihen an Käseformen (13), die quer zur Verfahrrichtung des Verteilkopfes (6) in der Wanne (2) anordenbar sind, abgestimmt ist.

8. Vorrichtung nach einem der Ansprüche 5 bis 7, **dadurch gekennzeichnet, dass** der Abfüllkopf (12) zur Zuführung einer Wasser-Kräutermischung mit einem Mehrzweckerhitzer (19) gekoppelt ist.

9. Vorrichtung nach Anspruch 8, **dadurch gekennzeichnet, dass** der Mehrzweckerhitzer (19) mit einem Rührwerk (21), einer Heizeinrichtung und einer Pumpe (23) versehen ist.

10. Vorrichtung nach Anspruch 8 oder 9, **dadurch gekennzeichnet, dass** der Abfüllkopf (12) mittels eines Schlauches (17) mit dem Mehrzweckerhitzer (19) verbunden ist.

11. Vorrichtung nach einem der Ansprüche 5 bis 10, **dadurch gekennzeichnet, dass** der Abfüllkopf (12) mit Dosierern (25) oder Quetschventilen (30) versehen ist, wobei die Anzahl der Dosierer (25) oder Quetschventile (30) mit der Anzahl Käseformen (13) in einer Reihe korreliert.

## Claims

1. A method for producing herb cheese, in particular hard cheese, in which raw cheese mass with the whey approximately 80% drained is poured into cheese moulds (13), which are preferably arranged in a trough (2) of a compartmented press (1), and then pressed, **characterised in that**
herbs, spices are uniformly introduced into the cheese moulds (13) at the same time or parallel with the raw cheese mass.

2. The method according to Claim 1,
**characterised in that**
whey drainage takes place in a dry filler (27), and the whey is conducted away uncontaminated and supplied to a further use.

3. The method according to Claim 1 or 2,
**characterised in that**
the cheese moulds (13) are filled by means of a distribution head (6), which executes a uniform back and forth movement along the trough (2).

4. The method according to any one of Claims 1 to 3, **characterised in that**
the herbs and/or spices are mixed with water, preferably stirred uniformly and heated and, after a preset temperature has been reached, introduced uniformly into the cheese moulds as a herb-water mixture via a filling head (12).

5. A device for producing herb cheese, in particular hard cheese, comprising cheese moulds (13) for filling with raw cheese mass, which are arranged in an open trough (2), to which are assigned a pressing head (3) having a plurality of press stamps (4) oriented towards the cheese moulds (13) for pressing the raw cheese mass, and a distribution head (6) for flotation of the raw cheese mass, the distribution head (6) being arranged such that it can move back and forth along the longitudinal sides of the trough (2), **characterised in that**
the distribution head (6) is assigned a filling head (12) for herbs and/or spices mixed with water.

6. The device according to Claim 5,
**characterised in that**
the distribution head (6) is provided with a dry filler (27) and is coupled to a rotatable articulated tube assembly for supplying the raw cheese mass from a cheese-making machine.

7. The device according to Claim 5 or 6, **characterised in that**
the filling head (12) is provided with dosers (25), the number of which is matched to rows of cheese moulds (13) which can be arranged in the trough (2) transversely to the direction of movement of the distribution head (6).

8. The device according to any one of Claims 5 to 7, **characterised in that**
the filling head (12) is coupled to a multi-purpose heater (19) for supplying a water-herb mixture.

9. The device according to Claim 8,
**characterised in that**
the multi-purpose heater (19) is provided with a stirring mechanism (21), a heating apparatus and a pump (23) .

10. The device according to Claim 8 or 9, **characterised in that**
the filling head (12) is connected to the multi-purpose heater (19) by means of a hose (17).

11. The device according to any one of Claims 5 to 10, **characterised in that**
the filling head (12) is provided with dosers (25) or pinch valves (30), wherein the number of dosers (25) or pinch valves (30) correlates with the number of cheese moulds (13) in a row.

## Revendications

1. Procédé de production de fromage aux fines herbes, notamment de fromage à pâte dure, lors duquel l'on charge une masse brute de fromage égouttée à environ 80 % dans des moules à fromage (13), qui sont placés de préférence dans une cuve (2) d'une presse à cassettes (1) et on la presse par la suite, **caractérisé en ce que** simultanément ou parallèlement à la masse brute de fromage, l'on introduit régulière des fines herbes, des épices, dans les moules à fromage (13)

2. Procédé selon la revendication 1, **caractérisé en ce que** l'égouttage s'effectue dans un remplisseur à sec (27) et le petit lait est évacué à l'état non contaminé et réutilisé à d'autres fins.

3. Procédé selon la revendication 1 ou 2, **caractérisé en ce que** le remplissage des moules à fromage (13) s'effectue à l'aide d'une tête de distribution (6) qui effectue un mouvement de va et vient régulier le long de la cuve (2).

4. Procédé selon l'une quelconque des revendications 1 à 3, **caractérisé en ce que** l'on mélange des fines herbes et/ou des épices avec de l'eau, l'on brasse, de préférence régulièrement et l'on fait chauffer et à l'atteinte d'une température préalablement réglée, on les introduit régulièrement en tant que mélange fines herbes/eau dans les moules à fromage par l'intermédiaire d'une tête de remplissage (12).

5. Dispositif, destiné à produire du fromage aux fines herbes, notamment du fromage à pâte dure, comprenant des moules à fromage (13), destinés à être remplis d'une masse brute de fromage, qui sont placés dans une cuve (2) ouverte, à laquelle sont associées une tête de pressage (3) pourvue d'une pluralité de poinçons presseurs (4), orientés vers les moules à fromage (13), pour presser la masse brute de fromage et une tête de distribution (6) pour le noyage de la masse brute de fromage, la tête de distribution (6) étant placée en étant déplaçable en va et vient le long des côtés longitudinaux de la cuve (2), **caractérisée en ce qu'**à la tête de distribution (6) est associée une tête remplisseuse (12) pour des fines herbes et/ou des épices mélangées à de l'eau.

6. Dispositif selon la revendication 5, **caractérisé en ce que** la tête de distribution (6) est munie d'un remplisseur à sec (27) et d'un ensemble d'articulations mobiles en rotation, destinés à alimenter la masse brute de fromage à partir d'une cuve de fromagerie.

7. Dispositif selon la revendication 5 ou 6, **caractérisé en ce que** la tête remplisseuse (12) est munie de doseurs (25) dont le nombre est adapté à des rangées de moules à fromage (13), qui peuvent se placer à la transversale de la tête de distribution (6) dans la cuve (2).

8. Dispositif selon l'une quelconque des revendications 5 à 7, **caractérisé en ce que** la tête remplisseuse (12) est accouplée sur un réchauffeur (19) à usages multiples, pour alimenter un mélange eau/fines herbes.

9. Dispositif selon la revendication 8, **caractérisé en ce que** le réchauffeur (19) à usages multiples est muni d'un agitateur (21), d'un dispositif de chauffage et d'une pompe (23).

10. Dispositif selon la revendication 8 ou 9, **caractérisé en ce que** la tête remplisseuse (12) est reliée à l'aide d'un flexible (17) avec le réchauffeur (19) à usages multiples.

11. Dispositif selon l'une quelconque des revendications 5 à 10, **caractérisé en ce que** la tête remplisseuse (12) est munie de doseurs (25) ou de vannes à pincement (30), le nombre des doseurs (25) ou de vannes à pincement (30) étant en corrélation dans une rangée avec le nombre des moules à fromage (13).
